# FASCICULE DE BREVET EUROPEEN

(11) **EP 2 395 271 B1**
(45) Date de publication et mention de la délivrance du brevet: **26.07.2017**
(21) Numéro de dépôt: 11168954.3
(22) Date de dépôt: 07.06.2011
(51) Int. Cl.: F16L 11/08, B32B 1/08, B32B 25/14

(54) **Tuyau pour circuit d'admission d'air de moteur de véhicule automobile, et ce circuit l'incorporant**
Schlauch für Luftzufuhrkreislauf eines Kraftfahrzeugmotors, und diesen Schlauch umfassender Kreislauf
Pipe for an car engine air-intake circuit, and circuit comprising same.

(30) Priorité: 14.06.2010 FR 1002501
(43) Date de publication de la demande: 14.12.2011
(73) Titulaire: HUTCHINSON, 75008 Paris (FR)
(72) Inventeur: Nicolas, Ludovic, 45700 Villemandeur (FR); Bierce-Argy, Gwenaëlle, 45210 Ferrieres en Gâtinais (FR); Houee, Sandrine, 45200 Amilly (FR); Larroque, Christian, 45700 Pannes (FR); Caliskan, Alper, 45140 Saint Jean de la Ruelle (FR)
(74) Mandataire: Gevers & Orès

(56) Documents cités:
- EP-A1- 1 334 995
- EP-A1- 1 568 484
- WO-A1-2004/029493
- JP-A- 2006 247 883
- US-A- 5 319 036
- DATABASE WPI Week 199112 Thomson Scientific, London, GB; AN 1991-084553 XP002619903, & JP 3 031351 A (TOSOH CORP) 12 février 1991 (1991-02-12)
- DATABASE WPI Week 200864 Thomson Scientific, London, GB; AN 2008-K77747 XP002619904, & JP 2008 188952 A (BRIDGESTONE CORP) 21 août 2008 (2008-08-21)
- DATABASE WPI Week 200808 Thomson Scientific, London, GB; AN 2008-B21286 XP002619905, & JP 2007 269008 A (TOKAI RUBBER IND LTD) 18 octobre 2007 (2007-10-18)

## Description

La présente invention concerne un tuyau utilisable pour un circuit d'admission d'air de moteur de véhicule automobile, et ce circuit d'admission d'air en particulier pour l'admission d'air en sortie d'un turbocompresseur qui incorpore au moins un tel tuyau. L'invention s'applique d'une manière plus générale à un tuyau de transport de fluide, quelles que soient la nature de ce fluide et ses conditions de circulation.

D'une manière générale, un tuyau qui transporte un fluide sous forme liquide ou gazeuse doit notamment résister à la pression, à la température et à l'agressivité du fluide transporté, d'une part, et à l'agressivité du milieu environnant, d'autre part.

Dans le cas d'un tuyau d'admission d'air pour moteur turbocompressé de véhicule automobile, le fluide est de l'air chaud à une pression d'environ 1,5 à 2 bars et à une température d'environ 100° C à 200° C, et cet air chaud est chargé d'huile (en particulier de l'huile utilisée pour lubrifier le turbocompresseur), ce qui impose de prévoir que la couche interne de ce tuyau résiste de manière satisfaisante à l'effet agressif de l'huile. Par ailleurs, la température sous le capot moteur tendant à augmenter de plus en plus, le tuyau d'admission d'air doit résister à une température extérieure d'environ 150° C.

Pour obtenir de telles résistances, on utilise généralement des couches interne et externe pour ce tuyau qui sont toutes deux constituées de matériaux élastomères à base de copolymères éthylène-acide acrylique (AEM en abrégé, en particulier du VAMAC®) réticulables par une amine ou un peroxyde, ou bien des copolymères d'un acrylate et d'un comonomère apportant des sites réactifs pour la réticulation au soufre ou par une amine (ACM en abrégé).

Egalement de manière connue, on renforce ces tuyaux d'admission d'air par un tricot qui est disposé entre ces couches interne et externe et qui est usuellement constitué de multifilaments en m-aramide (polyamide aromatique), ce qui permet de conférer au tuyau une excellente tenue à des températures extérieures élevées. Cependant, le m-aramide présente l'inconvénient de pénaliser le coût de fabrication global du tuyau en comparaison du PET (polyéthylène téréphtalate) notamment, qui est un matériau bien moins coûteux.

Le document EP-A1-1 334 995 présente un tuyau par exemple pour un circuit d'admission d'air en sortie d'un turbocompresseur qui peut comporter, entre ces couches interne et externe, un renforcement en PET et une couche intermédiaire intercalée entre la couche interne et ce renforcement, étant précisé que les couches intermédiaire et externe au contact du PET sont toutes deux spécifiquement à base d'un ACM ou AEM qui comprend des sites réactifs carboxyles et qui est réticulé par une amine. Plus précisément, le système de réticulation choisi pour ces deux couches comprend une diamine à titre d'agent réticulant et une guanidine couplée à un dérivé de guanidine chélaté par un métal à titre de promoteur de réticulation, ce qui permet d'éviter la détérioration connue par aminolyse du PET au contact de l'ACM ou AEM réticulé par une amine.

Un inconvénient majeur du tuyau présenté dans ce document réside dans le choix de ce système de réticulation complexe et coûteux en relation avec l'élastomère ACM ou AEM à sites nécessairement carboxyles, et dans le coût de fabrication relativement élevé en résultant pour le tuyau.

Le document EP-A1-1 568 484 divulgue un tuyau utilisable pour un circuit d'air de moteur de véhicule automobile, comportant une couche élastomère interne, des couches élastomères intermédiaire et externe toutes deux à base d'un ACM réticulé par un peroxyde, et une structure de renforcement située entre les couches intermédiaire et externe et qui comprend des fils indifféremment à base d'alcool polyvinylique, de polyamide de type Nylon® ou aramide, ou de PET.

Un but de la présente invention est de proposer un tuyau utilisable pour transporter de l'air chargé d'huile dans un circuit d'admission d'air pour moteur de véhicule automobile qui remédie à ces inconvénients, le tuyau comportant au moins une couche élastomère interne, une couche élastomère externe, une couche élastomère intermédiaire prévue pour faciliter l'adhésion entre les couches interne et externe et une structure de renforcement située radialement entre les couches intermédiaire et externe et comprenant des fils à base d'un polyester aliphatique tel qu'un PET, chacune des couches intermédiaire et externe étant constituée d'une composition spécifiquement à base d'au moins un ACM.

A cet effet, un tuyau selon l'invention est tel que ladite composition est réticulée par un système choisi dans le groupe constitué par ceux à base d'au moins un savon associé au soufre, à un dérivé d'urée et ceux à base d'un thiadiazole.

On notera que ladite composition de couche intermédiaire et de couche externe peut être ainsi dépourvue d'AEM et en outre de tout système de réticulation au peroxyde. Avantageusement, cette composition utilisée pour les couches intermédiaire et externe est dépourvue d'agent réticulant de type amine ou diamine.

On notera que ce tuyau selon l'invention permet ainsi d'éviter d'être confronté au problème d'aminolyse du PET du fait de l'utilisation à son contact d'un ACM réticulé par un système non aminé qui est compatible avec le PET, tout en présentant d'une manière surprenante une tenue thermique satisfaisante aux températures intérieures et extérieures élevées et une résistance mécanique également satisfaisante.

On notera également que ce tuyau de l'invention, tel qu'une durite pour circuit d'admission d'air en sortie d'un turbocompresseur, peut ainsi supporter de manière satisfaisante des températures moyennes internes d'environ 180° C et de 200° C en pointe et des températures moyennes externes d'environ 130° C et de 150° C en pointe.

Egalement avantageusement, ledit au moins un copolymère de chacune des couches intermédiaire et externe est un ACM qui, pour sa réticulation, incorpore des sites réactifs halogénés, de préférence chlorés, et est dépourvu de tout site réactif carboxyle. A titre encore plus préférentiel, la composition utilisée pour ces couches intermédiaire et externe est réticulée par un système à base de savons et de soufre.

On notera que ces ACM qui sont préférentiellement de grade chloré et présentent l'avantage d'être relativement répandus, sont réticulables au moyen d'un système dont les ingrédients sont largement disponibles, ce qui contribue à ne pas pénaliser le coût global de fabrication du tuyau.

Selon un exemple de réalisation de l'invention, ces savons comprennent un mélange de stéarate de sodium de préférence selon une quantité comprise entre 2 et 3 pce, et de stéarate de potassium de préférence selon une quantité comprise entre 0,2 et 0,4 pce (pce : parties en poids pour cent parties d'élastomère(s)).

On notera également que l'utilisation de ce système de réticulation aux savons et au soufre permet de conférer au tuyau selon l'invention une tenue à la fatigue conforme aux exigences des constructeurs.

A titre de système de réticulation à base d'un savon et d'un dérivé d'urée utilisable dans ladite composition de couche intermédiaire et externe, on peut par exemple utiliser de 3 à 6 pce de stéarate de sodium comme agent réticulant et de 2 à 6 pce « diuron » (e.g. du 3-(3,4-dichlorophényl)-1,1-diméthylurée) comme accélérateur, additionné de 0 à 1 pce d'oxyde de magnésium comme autre accélérateur et de 0 à 3 pce d'acide stéarique comme retardateur.

A titre de système de réticulation à base d'un thiadiazole utilisable dans ladite composition de couche intermédiaire et externe, on peut par exemple utiliser de 0,4 à 1 pce de thiadiazole de type Vanax 829 ® comme agent réticulant, additionné de 2 à 4 pce de tétrabenzylthiuram disulfure (TBzTD) comme accélérateur et de 0 à 3 pce de stéarate de zinc comme retardateur.

De préférence, ledit au moins un copolymère de chaque couche intermédiaire et externe est un ACM de grade haute température (« ACM HT » en abrégé) optionnellement mélangé à un autre ACM HT ou bien à un élastomère fluorocarboné (FKM) avec dans ce dernier cas le système de réticulation de la composition qui comprend en outre un peroxyde.

Selon une autre caractéristique de l'invention, la couche interne peut être à base d'au moins un élastomère polaire réticulé par une amine ou par un peroxyde, qui est choisi dans le groupe constitué par les ACM, les AEM (par exemple de type Vamac®), les copolymères d'éthylène et d'acétate de vinyle (EVA), les fluorosilicones, les élastomères fluorocarbonés (FKM) et leurs mélanges.

De préférence, la couche interne est à base d'au moins un ACM réticulé par une amine. On notera que d'une manière surprenante, cette couche interne permet, en relation avec des couches intermédiaire et externe à base d'un ACM réticulé aux savons et au soufre, d'améliorer sensiblement la tenue thermique du tuyau aux hautes températures internes et externes.

Selon une autre caractéristique de l'invention, ladite structure de renforcement peut comprendre un tricot ou tresse à base de fils multifilamentaires réalisés en un ou plusieurs matériau(x) textile(s) par exemple de rigidités différentes dont l'un au moins est un PET. Dans la présente description, le terme « fil » désigne de manière connue aussi bien un filé à base d'une multitude de filaments élémentaires de faible diamètre qui sont tordus ensemble, qu'un retors obtenu par torsion de plusieurs filés.

On notera que les compositions élastomères respectivement interne, intermédiaire et externes conformes à l'invention comprennent également, outre le(s)dit(s) élastomères et ledit système de réticulation, une charge renforçante à base de noir(s) de carbone ainsi que tout ou partie des autres ingrédients ou additifs habituellement utilisés dans les couches élastomères de tuyaux ou durites tels que, à titre non limitatif, des agents de mise en oeuvre et des antioxydants.

Un circuit d'admission d'air pour moteur de véhicule automobile selon l'invention, en particulier pour l'admission d'air en sortie de turbocompresseur, comporte au moins un tuyau tel que défini ci-dessus et en outre pourvu d'embouts métalliques de raccordement qui sont montés au contact de sa couche interne et revêtus en surface de zinc et/ou de nickel.

Avantageusement, la couche interne du ou de chaque tuyau du circuit est à base dudit au moins un élastomère polaire défini ci-dessus qui est réticulé par une amine ou un peroxyde, i.e. par un système dépourvu de soufre, ce qui autorise les traitements de surface de type zinc/ nickel pour les embouts raccordés à cette couche interne du fait de la compatibilité d'un tel élastomère polaire non soufré avec les embouts ainsi traités.

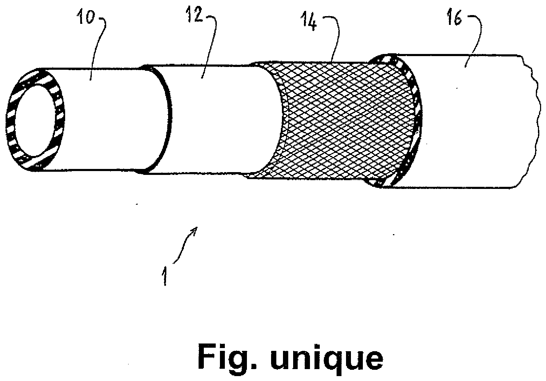

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec le dessin joint, dans lequel :
la figure unique est une vue schématique partielle en perspective et avec arrachements partiels d'un tuyau selon l'invention.

Le tuyau 1 illustré sur cette figure comprend, radialement de l'intérieur vers l'extérieur :
- une couche interne élastomère 10 prévue étanche et résistante à l'agressivité du fluide transporté, i.e. notamment conçue pour résister à la température du mélange air-huile d'un circuit d'admission d'air en sortie de turbocompresseur et à l'agressivité de l'huile contenue dans ce mélange, la couche 10 pouvant présenter une épaisseur de 1,5 mm environ et étant par exemple à base d'au moins un ACM réticulé par une amine,
- une couche intermédiaire élastomère 12 prévue pour faciliter l'adhésion entre la couche 10 et une couche externe 16 du tuyau, la couche 12 pouvant présenter une épaisseur de 0,5 mm environ et étant par exemple à base d'au moins un ACM réticulé au soufre,
- une structure de renforcement 14, telle qu'un tricot dont les fils sont constitués au moins en partie de PET (étant précisé que cette structure 14 pourrait incorporer en outre des fils de rigidité différente par exemple en polyamide, à l'instar de la structure hybride présentée dans le document FR-B1-2 892 488 au nom de la Demanderesse), et
- la couche externe 16 prévue pour résister à l'environnement extérieur du tuyau à proximité du moteur, la couche 16 pouvant présenter une épaisseur de 3 mm environ et étant par exemple à base d'au moins un ACM réticulé au soufre tout comme la couche 12.

Les couches 10, 12 et 16 peuvent être avantageusement obtenues par coextrusion.

Le tableau 1 ci-après rend compte de sept essais relatifs à diverses formulations A à G selon l'invention pour couches intermédiaire 12 et externe 16 (de formulations identiques) de tuyaux selon l'invention, ces essais ayant respectivement permis de fabriquer sept plaques rectangulaires A à G moulées, vulcanisées sous presse et façonnées sous forme d'éprouvettes de type haltères H2, dont les propriétés mécaniques ont été mesurées conformément à la norme ISO 37 de 2005. Les quantités utilisées pour ces formulations de couches 12 et 16 sont exprimées en pce (parties en poids pour cent parties d'élastomère(s)).

**Tableau 1 :**

| | nom commercial | **A** | **B** | **C** | **D** | **E** | **F** | **G** |
|---|---|---|---|---|---|---|---|---|
| ACM 1 | Noxtite PA 1402 | 75 | 75 | 100 | 75 | | | 80 |
| ACM 2 | Noxtite PA 402B | 25 | 25 | | 25 | 100 | | |
| ACM 3 | Hytemp AR715 | | | | | | 100 | |
| ACM 4 | Hytemp AR72 HF | | | | | | | |
| FKM | P757 | | | | | | | 20 |
| Noir de carbone | Spheron 1416 | 50 | | 50 | 50 | | | 50 |
| Noir de carbone | Sterling SO N550 | | 50 | | | 60 | 60 | |
| Huile minérale blanche (agent mise en oeuvre) | Marcol 82 | 2 | 2 | 2 | 2 | 2 | 2 | 2 |
| Antioxydant (diphénylamines) | Dusantox 86 | 2 | 2 | 2 | 2 | 2 | 2 | 2 |
| Antioxydant (oxyde de titane) | P25 | | | | 2 | | | |
| Acide stéarique | - | 1 | 1 | 1 | 1 | 1 | 1 | 1 |
| peroxyde | DHBP | | | | | | | 0,15 |
| Co-agent de réticulation | TAlC | | | | | | | 0,3 |
| Stéarate de sodium | - | 2 | 2 | 2 | 2 | 3 | 3 | 2 |
| Stéarate de potassium | - | 0,3 | 0,3 | 0,3 | 0,3 | 0,3 | 0,3 | 0,3 |
| soufre | - | 0,2 | 0,2 | 0,2 | 0,2 | 0,3 | 0,3 | 0,2 |

| **PROPRIETES MECANIQUES** | | | | | | | | |
|---|---|---|---|---|---|---|---|---|
| Dureté Shore A | | 60 | 55 | 61 | 65 | 58 | 55 | 67 |
| Résistance rupture (MPa) | Sans vieillissement | 12 | 11,7 | 13 | 11,6 | 9,9 | 10,4 | 12 |
| Allongement rupture (%) | Sans vieillissement | 299 | 260 | 303 | 275 | 410 | 429 | 261 |
| Résistance rupture (MPa) | Vieillissement 72 h : air 200° C | 7,5 | 8,4 | 8,4 | 8 | 4,8 | 4,57 | 8,7 |
| Allongement rupture (%) | Vieillissement 72 h : air 200° C | 162 | 197 | 158 | 188 | 192 | 227 | 226 |

Plus précisément, les températures de transition vitreuse Tg et la viscosité Mooney ML(1+4) à 100° C des ACM étaient les suivantes :
ACM 1 : Tg = -28° C et ML(1+4) = 39
ACM 2 : Tg = -31° C et ML(1+4) = 33
ACM 3 : Tg = -17° C et ML(1+4) = 33
ACM 4 : Tg = -28° C et ML(1+4) = 48.

Quant à l'élastomère FKM « P757 », il présentait une température TR 10 de -15° C, une viscosité Mooney ML(1+10) à 121° C de 44, et un taux de fluor de 67 %.

Ce tableau 1 montre que les compositions A à G de l'invention présentent des propriétés mécaniques satisfaisantes, que la matrice élastomère soit constituée d'un ou plusieurs ACM réticulé(s) par un système incluant des savons et du soufre (cas des tuyaux A à F) ou bien qu'elle comprenne majoritairement un ACM réticulé par ce système et un FKM réticulé au peroxyde (cas du tuyau G).

On a par ailleurs confectionné des tuyaux selon l'invention dont les couches intermédiaire 12 et externe 16 étaient chacune constituées de ladite composition A, dont la couche interne 10 était à base d'un ACM réticulé par une amine et dont la structure de renforcement 14 était constituée d'un tricot de multifilaments de PET, et l'on a soumis ces tuyaux à des essais d'endurance en découplage selon la norme PSA B227110, dont les conditions expérimentales et les résultats figurent dans le tableau 2 ci-après.

**Tableau 2 :**

| | |
|---|---|
| Débattement constant | ± 30 mm |
| Pression Pservice | 0 à 1,5 bar |
| Pression Pmax | 0 à 1,7 bar |
| Pression statique (découplage pendant 46 h) | 1 bar |
| Température de gaz utile Tgu | 180° C |
| Température de gaz maximale Tgmax | 200° C |
| Température extérieure utile Teu | 110° C |
| Température extérieure maximale Temax | 130° C |
| Température extérieure minimale Temini (découplage pendant 46 h) | -30° C |
| Pression pulsée | 60 000 cycles |
| Débattement total (172 800 en phase 1 + 39 744 en découplage) | 212 544 débattements |
| Temps total | 246 h |

Ces essais d'endurance ont montré que les tuyaux selon l'invention présentent une endurance de découplage satisfaisante, étant jugé conformes selon cette norme B227114 de PSA.

## Revendications

1. Tuyau (1) utilisable pour transporter de l'air chargé d'huile dans un circuit d'admission d'air pour moteur de véhicule automobile, le tuyau comportant au moins :
- une couche élastomère interne (10),
- une couche élastomère externe (16),
- une couche élastomère intermédiaire (12) prévue pour faciliter l'adhésion entre les couches interne et externe, et
- une structure de renforcement (14) qui est située radialement entre les couches intermédiaire et externe et qui comprend des fils à base d'un polyester aliphatique, tel qu'un polyéthylène téréphtalate (PET),
chacune des couches intermédiaire et externe étant constituée d'une composition à base d'au moins un copolymère d'un acrylate (ACM),
**caractérisé en ce que** ladite composition est réticulée par un système choisi dans le groupe constitué par ceux à base d'au moins un savon associé au soufre, un savon associé à un dérivé d'urée et ceux à base d'un thiadiazole.

2. Tuyau (1) selon la revendication 1, **caractérisé en ce que** ladite composition est dépourvue d'agent réticulant de type amine ou diamine.

3. Tuyau (1) selon la revendication 1 ou 2, **caractérisé en ce que** ledit au moins un copolymère de chacune des couches intermédiaire (12) et externe (16) est un ACM qui, pour sa réticulation, incorpore des sites réactifs halogénés de préférence chlorés et est dépourvu de tout site réactif carboxyle.

4. Tuyau (1) selon une des revendications précédentes, **caractérisé en ce que** ladite composition est réticulée par un système à base de savons et de soufre.

5. Tuyau (1) selon la revendication 4, **caractérisé en ce que** ces savons comprennent un mélange de stéarate de sodium de préférence selon une quantité comprise entre 2 et 3 pce, et de stéarate de potassium de préférence selon une quantité comprise entre 0,2 et 0,4 pce (pce : parties en poids pour cent parties d'élastomère(s)).

6. Tuyau (1) selon la revendication 4 ou 5, **caractérisé en ce que** ledit au moins un copolymère de chacune des couches intermédiaire (12) et externe (16) est un ACM de grade haute température (ACM HT), qui est optionnellement mélangé à un autre ACM de grade HT ou bien à un élastomère fluorocarboné (FKM) avec dans ce dernier cas le système de réticulation de ladite composition qui comprend en outre un peroxyde.

7. Tuyau (1) selon une des revendications précédentes, **caractérisé en ce que** la couche interne (10) est à base d'au moins un élastomère polaire réticulé par une amine ou par un peroxyde, qui est choisi dans le groupe constitué par les ACM, les AEM, les copolymères d'éthylène et d'acétate de vinyle (EVA), les fluorosilicones, les élastomères fluorocarbonés (FKM) et leurs mélanges.

8. Tuyau (1) selon la revendication 4 ou 5 et selon la revendication 7, **caractérisé en ce que** la couche interne (10) est à base d'au moins un ACM réticulé par une amine.

9. Tuyau (1) selon une des revendications précédentes, **caractérisé en ce que** ladite structure de renforcement (14) comprend un tricot ou tresse à base de fils multifilamentaires réalisés en un ou plusieurs matériau(x) textile(s) dont l'un au moins est un PET.

10. Circuit d'admission d'air pour moteur de véhicule automobile, en particulier pour l'admission d'air en sortie d'un turbocompresseur, **caractérisé en ce qu'**il comporte au moins un tuyau (1) selon une des revendications précédentes, ce tuyau étant pourvu d'embouts métalliques de raccordement qui sont montés au contact de sa couche interne (10) et qui sont revêtus en surface de zinc et/ou de nickel.

11. Circuit d'admission d'air selon la revendication 10, **caractérisé en ce que** la couche interne (10) dudit au moins un tuyau (1) est à base d'au moins un élastomère polaire réticulé par une amine ou par un peroxyde, qui est choisi dans le groupe constitué par les ACM, les AEM, les copolymères d'éthylène et d'acétate de vinyle (EVA), les fluorosilicones, les élastomères fluorocarbonés (FKM) et leurs mélanges.

## Patentansprüche

1. Schlauch (1) für den Transport von mit Öl beladener Luft in einem Luftzufuhrkreislauf eines Kraftfahrzeugmotors, wobei der Schlauch zumindest Folgendes umfasst:
- eine innere Elastomerschicht (10),
- eine äußere Elastomerschicht (18),
- eine Elastomerzwischenschicht (12), die vorgesehen ist, um die Haftung zwischen der inneren und der äußeren zu vereinfachen, und
- eine Verstärkungsstruktur (14), die sich radial zwischen der Zwischenschicht und der äußeren Schicht befindet, und die Fäden auf Basis eines aliphatischen Polyesters umfasst, wie Polyethylenterephthalat (PET),
wobei jede der Zwischenschicht und der äußeren Schicht aus einer Zusammensetzung auf Basis zumindest eines Copolymers eines Acrylats (ACM) besteht,
**dadurch gekennzeichnet, dass** die Zusammensetzung durch ein System vernetzt ist, das aus der Gruppe gewählt wird, die von denjenigen auf Basis zumindest eine Seife mit Schwefel verbunden, eine Seife mit einem Harnstoff-Derivat verbunden und denjenigen auf Basis eines Thiadiazols gebildet wird.

2. Schlauch (1) nach Anspruch 1, **dadurch gekennzeichnet, dass** die Zusammensetzung frei von Vernetzungsmittel von der Art Amin oder Diamin ist.

3. Schlauch (1) nach Anspruch 1 oder 2, **dadurch gekennzeichnet, dass** das zumindest eine Copolymer jeder der Zwischenschicht (12) und der Außenschicht (16) ein ACM ist, das für seine Vernetzung reaktive halogenhaltige bevorzugt chlorierte Zentren enthält und frei von jeglichem reaktiven Carboxylzentrum ist.

4. Schlauch (1) nach einem der vorstehenden Ansprüche, **dadurch gekennzeichnet, dass** die Zusammensetzung durch ein System auf Basis von Seifen und Schwefel vernetzt ist.

5. Schlauch (1) nach Anspruch 4, **dadurch gekennzeichnet, dass** diese Seifen ein Gemisch aus Natriumstearat bevorzugt nach einer Menge von zwischen 2 und 3 pce, und Kaliumstearat bevorzugt nach einer Menge von zwischen 0,2 und 0,4 pce umfassen (pce: Gewichtsanteile auf hundert Teile Elastomer(e)).

6. Schlauch (1) nach Anspruch 4 oder 5, **dadurch gekennzeichnet, dass** das zumindest eine Copolymer jeder der Zwischenschicht (12) und der Außenschicht (16) ein ACM des Hochtemperaturgrades (ACM HT) ist, das optional mit einem anderen ACM mit dem Grad HT gemischt ist, oder auch mit einem Fluorkohlenstoffelastomer (FKM) mit im letztgenannten Fall dem Vernetzungssystem der Zusammensetzung, die ferner auch ein Peroxid umfasst.

7. Schlauch (1) nach einem der vorstehenden Ansprüche, **dadurch gekennzeichnet, dass** die innere Schicht (10) auf Basis zumindest eines polaren Elastomers ist, das durch ein Amin oder ein Peroxid vernetzt ist, das in der Gruppe bestehend aus den ACM, den AEM, den Ethylencopolymeren und Vinylacetat (EVA), den Fluorsilikonen, den Fluorkohlenstoffelastomeren (FKM) und ihren Gemischen gewählt wird.

8. Schlauch (1) nach Anspruch 4 oder 5 und nach Anspruch 7, **dadurch gekennzeichnet, dass** die innere Schicht (10) auf Basis von zumindest einem durch ein Amin venetztes ACM ist.

9. Schlauch (1) nach einem der vorstehenden Ansprüche, **dadurch gekennzeichnet, dass** die Verstärkungsstruktur (14) eine Maschen- oder Flechtware auf Basis von Mehrfadengarnen umfasst, das aus einem oder mehreren Textilmaterial(en) ausgeführt ist, von denen zumindest eines ein PET ist.

10. Luftzufuhrkreislauf für Kraftfahrzeugmotor, insbesondere für die Luftzufuhr am Ausgang eines Turbokompressors, **dadurch gekennzeichnet, dass** er zumindest einen Schlauch (1) nach einem der vorstehenden Ansprüche umfasst, wobei dieser Schlauch mit metallischen Anschlussstutzen versehen ist, die im Kontakt mit seiner inneren Schicht (10) montiert sind, und die an der Oberfläche mit Zink und/oder Nickel überzogen sind.

11. Luftzufuhrkreislauf nach Anspruch 10, **dadurch gekennzeichnet, dass** die innere Schicht (10) des zumindest einen Schlauchs (1) auf Basis von zumindest einem polaren Elastomer ist, das von einem Amin oder von einem Peroxid vernetzt ist, das in der Gruppe bestehend aus den ACM, den AEM, den Ethylencopolymeren und Vinylacetat (EVA), den Fluorsilikonen, den Fluorkohlenstoffelastomeren (FKM) und ihren Gemischen gewählt wird.

## Claims

1. Pipe (1) usable for transporting air charged with oil in an air intake circuit for a motor vehicle engine, the pipe comprising at least:
- one inner elastomer layer (10),
- one outer elastomer layer (16),
- one intermediate elastomer layer (12) provided to facilitate the adhesion between the inner and outer layers, and
- one reinforcing structure (14) which is situated radially between the intermediate and outer layers and which comprises yarns based on an aliphatic polyester, such as a polyethylene terephthalate (PET),
each of the intermediate and outer layers being formed from a composition based on at least one acrylate copolymer (ACM),
**characterized in that** said composition is crosslinked by means of a system chosen from the group consisting of those based on at least one soap combined with sulfur, one soap combined with a urea derivative and those based on a thiadiazole.

2. Pipe (1) according to Claim 1, **characterized in that** said composition is free of crosslinking agent of amine or diamine type.

3. Pipe (1) according to Claim 1 or 2, **characterized in that** said at least one copolymer of each of the intermediate (12) and outer (16) layers is an ACM which, for its crosslinking, incorporates halogenated and preferably chlorinated reactive sites and is free of any carboxyl reactive sites.

4. Pipe (1) according to one of the preceding claims, **characterized in that** said composition is crosslinked by means of a system based on soaps and sulfur.

5. Pipe (1) according to Claim 4, **characterized in that** these soaps comprise a mixture of sodium stearate preferably in an amount of between 2 and 3 pce, and of potassium stearate preferably in an amount of between 0.2 and 0.4 pce (pce: parts by weight per one hundred parts of elastomer(s)).

6. Pipe (1) according to Claim 4 or 5, **characterized in that** said at least one copolymer of each of the intermediate (12) and outer (16) layers is a high-temperature-grade ACM (ACM HT), which is optionally mixed with another HT-grade ACM or with a fluorocarbon-based elastomer (FKM) with, in the latter case, the crosslinking system for said composition which also comprises a peroxide.

7. Pipe (1) according to one of the preceding claims, **characterized in that** the inner layer (10) is based on at least one polar elastomer crosslinked with an amine or with a peroxide, which is chosen from the group consisting of ACMs, AEMs, ethylene-vinyl acetate (EVA) copolymers, fluorosilicones and fluorocarbon-based elastomers (FKM), and mixtures thereof.

8. Pipe (1) according to Claim 4 or 5 and according to Claim 7, **characterized in that** the inner layer (10) is based on at least one ACM crosslinked with an amine.

9. Pipe (1) according to one of the preceding claims, **characterized in that** said reinforcing structure (14) comprises ribbed fabric or braid based on multifilament yarns made of one or more textile material(s), at least one of which is a PET.

10. Air intake circuit for a motor vehicle engine, in particular for the intake of air at the outlet of a turbocompressor, **characterized in that** it comprises at least one pipe (1) according to one of the preceding claims, this pipe being provided with metal connectors that are mounted in contact with its inner layer (10) and that are surface-coated with zinc and/or nickel.

11. Air intake circuit according to Claim 10, **characterized in that** the inner layer (10) of said at least one pipe (1) is based on at least one polar elastomer crosslinked with an amine or with a peroxide, which is chosen from the group formed by ACMs, AEMs, ethylene-vinyl acetate (EVA) copolymers, fluorosilicones and fluorocarbon-based elastomers (FKM), and mixtures thereof.
